(19) Europäisches Patentamt
European Patent Office
Office européen des brevets

(11) EP 0 558 568 B1

(12) EUROPEAN PATENT SPECIFICATION

(45) Date of publication and mention of the grant of the patent:
**24.02.1999 Bulletin 1999/08**

(21) Application number: **91920260.6**

(22) Date of filing: **20.11.1991**

(51) Int Cl.[6]: **C02F 1/52**, C02F 9/00

(86) International application number:
**PCT/DK91/00347**

(87) International publication number:
**WO 92/08674 (29.05.1992 Gazette 1992/12)**

(54) **A METHOD FOR TREATING AN ORGANIC SUBSTANCE**

VERFAHREN ZUM BEHANDELN EINER ORGANISCHEN SUBSTANZ

PROCEDE DE TRAITEMENT D'UNE SUBSTANCE ORGANIQUE

(84) Designated Contracting States:
**AT BE CH DE DK ES FR GB GR IT LI LU NL SE**

(30) Priority: **20.11.1990 DK 278890**

(43) Date of publication of application:
**08.09.1993 Bulletin 1993/36**

(73) Proprietor: **VESTERAGER, Niels Ole**
**24848 Kropp (DE)**

(72) Inventor: **VESTERAGER, Niels Ole**
**24848 Kropp (DE)**

(74) Representative: **Kyed, Iver et al**
**c/o Hofman-Bang & Boutard, Lehmann & Ree A/S,**
**Hans Bekkevolds Allé 7**
**2900 Hellerup (DK)**

(56) References cited:
**EP-A- 335 280**
**EP-A- 363 612**
**DE-A- 2 541 357**
**DE-A- 3 833 039**
**SE-B- 464 520**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

Background of the Invention.

The present invention relates to a method of treating a biomass in the form of domestic animal manure, slurry, organically loaded effluent waste water and the like, or mixtures thereof, and comprising a chemical treatment of the biomass.

Various methods are known in which a biomass is chemically treated in connection with the separation of the biomass. The chemical treatments are ordinarily used in connection with an adjustment of the pH-value of the liquid manure, e.g. in connection with biogas manufacture.

In the treatment of a biomass in the form of biologically loaded effluent waste water and the like, it has up to now been difficult to separate the biomass into components which may be utilized or which may directly be disposed of.

EP patent application No. 0,335,280, DE No. 3,833,039 and SE No. 464520 all describe methods of separating phosphorus and nitrogen from effluent waste water. Separation of potassium, calsium or metal ions which may be contained in the waste water is not disclosed.

The methods described in the three publications result in only a partly purifying of the waste water and therefore it is not possible to discharge the waste water directly to a recipient. The waste water must be finally treated or discharged as fertilizer on agricultural fields. Due to the very small fertilizing effect it is necessary to discharge great amounts. This is both time-consuming and resource-consuming. Furthermore, the produced solid state fraction is not directly usable. Therefore it will be necessary to deposit this fraction at a dumping ground.

Thus the drawback of the methods described in the above-mentioned publications is that the primarily basis is waste water. Thereby it is not considered how urea as well as further ion-components other than phosphorus and nitrogen are separated.

In connection with domestic animal manure, an insufficient separation has created the need for very large storage capacities. Furthermore, transport with the spreading of the very large quantities, which mainly are constituted by water, create certain problems, as the spreading is only allowed to be effected at certain times of the year. Several attempts have been made to separate the water and the nutrient salts in order to concentrate the nutrient salts into a small volume so as to make it possible to reduce the costs for storage and spreading. At the same time, the aim has been to sufficiently purify the water to allow it to be discharged directly to a recipient in order thereby to avoid the high disposal charges to the purification plant. Up to now, it has been difficult to sufficiently remove nitrogen, phosphorus and potassium from the water to allow the latter to be discharged directly to a recipient. In the treatment of domestic animal manure, it is also necessary to remove urea before allowing discharge of a water fraction.

It is the object of the invention to remedy the above mentioned problems, not exclusively in connection with domestic animal manure but generally in connection with a biomass, by providing a method according to claim 1 which makes it possible to separate the biomass into a small fraction which may be utilized as a fertilizer and a large fraction which may directly be discharged to a recipient.

Description of the Drawing.

The invention will now be explained in further detail with reference to the accompanying drawings wherein

Fig. 1 illustrates a flow chart for a method according to the invention, and

Fig. 2 illustrates a flow chart for an alternative method according to the invention.

Tank 1 is intended to receive the fresh biomass. In case of domestic animal manure, the tank 1 receives the liquid manure in a quantity corresponding to one day's production as it is desired to treat the liquid manure as fast as possible in order to limit the decomposition of urease to urea which may result in ammonification.

In tank 2 the fiber fraction is separated by adding a flocculation agent 14. The total fibre fraction 5 is discharged and transferred to tank 9 in which chemicals 13 are added to adjust the pH-value. Subsequently bacteria and enzymes are added to decompose the fibres and hence to liberate/extract nitrogen, phosphorus and potassium bound in the non-transformed fibre material. Thus, in tank 9 solid material is decomposed, e.g. lignocellulose, which facilitates a subsequent removal of N, P and K. N, P and K do not exist in the form of ions but are bound in the lignocellulose due to an incomplete biodegradation.

The pretreated fibre fraction is transferred from tank 9 to tank 3 in which it is mixed with the liquid fraction from tank 2 (from which the fibre fraction was previously separated). By adding metal ions and adjusting the pH-value, the urea complex, ammonium and phosphate are caused to precipitate in the acid to slightly alkaline solution. The selection of the added chemicals 11 depends on how the soil and plants will react on the precipitated fertilizer type.

In tank 3, two types of precipitation may be effected. Thus, an urea complex may be produced in which only urea is precipitated and (depending on the pH-value) ammonium ions may furthermore be precipitated from ammonia. Furthermore, phosphorus is precipitated. The nitrogen and phosphorus fractions as well as the urea complex are filtered off in a filter 4, and the liquid phase is transferred from tank 3 to tank 6 and the pH-value is adjusted so as to be approximately between 7.0 and 7.5. By adding metal ions and sulphate and phosphorus ions, (potassium ions) are precipitated as a double salt which is filtered off in a filter 7. The substances from the filters 4 and 7 may be mixed to form an organic fertilizer containing N, P and K. The liquid fraction is then transferred to a tank 8 and will consist of water which may be discharged directly into the external environment without violating public limit values for nitrogen and phosphorus content. The water will also be purified of potassium.

Thus, by means of the above method it is possible to obtain a water fraction which can be discharged directly and a fertilizer fraction which can be used as a dried fertilizer or as a dissolved fertilizer containing N, P and K. Thus, the costs of handling domestic animal manure are reduced. The environmental strain is reduced as N, P and K to a higher degree are recycled in the farming.

In tests with the described proces it has proved possible to obtain 15-50 kg organic fertilizer from one $m^3$ domestic animal manure, depending on the precipitation chemicals used. In the water fraction, residual concentrations of N and P as low as $N_{total}$ = 1.5 ppm and $P_{total}$ = 3.3 ppm are obtained, which allows a direct discharge to a recipient.

It is noted that the method according to the present invention may comprise another pre-treatment stage than the one shown in the process chart, as the pre-treatment prior to the transfer to tank 3 e.g. may consist of degasification or biogas formation so that the supply to tank 3 comprises degasified domestic animal manure. In the latter case, urea complex will not be precipitated in tank 3, as the urea content of the manure is decomposed during the biogas formation. It will also be possible to carry out the method according to the invention without the chemical reaction in tank 6 in which the potassium fraction is precipitated. As potassium is not a critical factor for the discharge of effluent waste water, the liquid phase from tank 3 can be discharged directly to the recipient without removal of potassium. However, finansial consideration will decide whether the potassium fraction is removed from the effluent waste water before the latter is led out into the external environment.

In the following various test results and examples of the chemicals used in the various proces stages are given.

Tests have been made with domestic animal manure comprising urea, ammonium, phosphorus and potassium. In the tests, the effect of oxalic acid, $COOH_2$, nitric acid, $HNO_3$ and optionally phosphorus acid in connection with metal ions were investigated in depth with a view to precipitating compositions containing crytalline urea. Furthermore, magnesium sulfate, $MgSO_4$, 7 $H_2O$ and manganese sulfate, $MnSO_4$, 4 $H_2O$ are used to precipitate the crystalline metal complexes simultaneosuly for $NH_4^+$ and $PO_4^{-3}$.

Substances are formed which are sparingly soluble in an acid solution and these substances can thus be separated by means of the filter 4 (if a chemical reaction is also carried out to separate potassium, the separation will be carried out in the filter 7). The substances formed are non-hygroscopic, which means that they are free-flowing.

An analysis of the fibre fraction prior to the bio/enzymatic reaction shows the following:

| | $NH_3$ | $P_2O_5$ | $K_2O$ |
|---|---|---|---|
| | $kg/m^3$ | $kg/m^3$ | $kg/m^3$ |
| Untreated biomass | 4.25 | 1.55 | 5.83 |
| Fibre fraction (5) | 1.96 | 0.58 | 1.76 |
| Biodegraded material (tank 9) | 1.53 | 0.42 | 1.28 |
| Non-transferred material | 0.43 | 0.16 | 0.48 |

This may also be illustrated in the following diagram

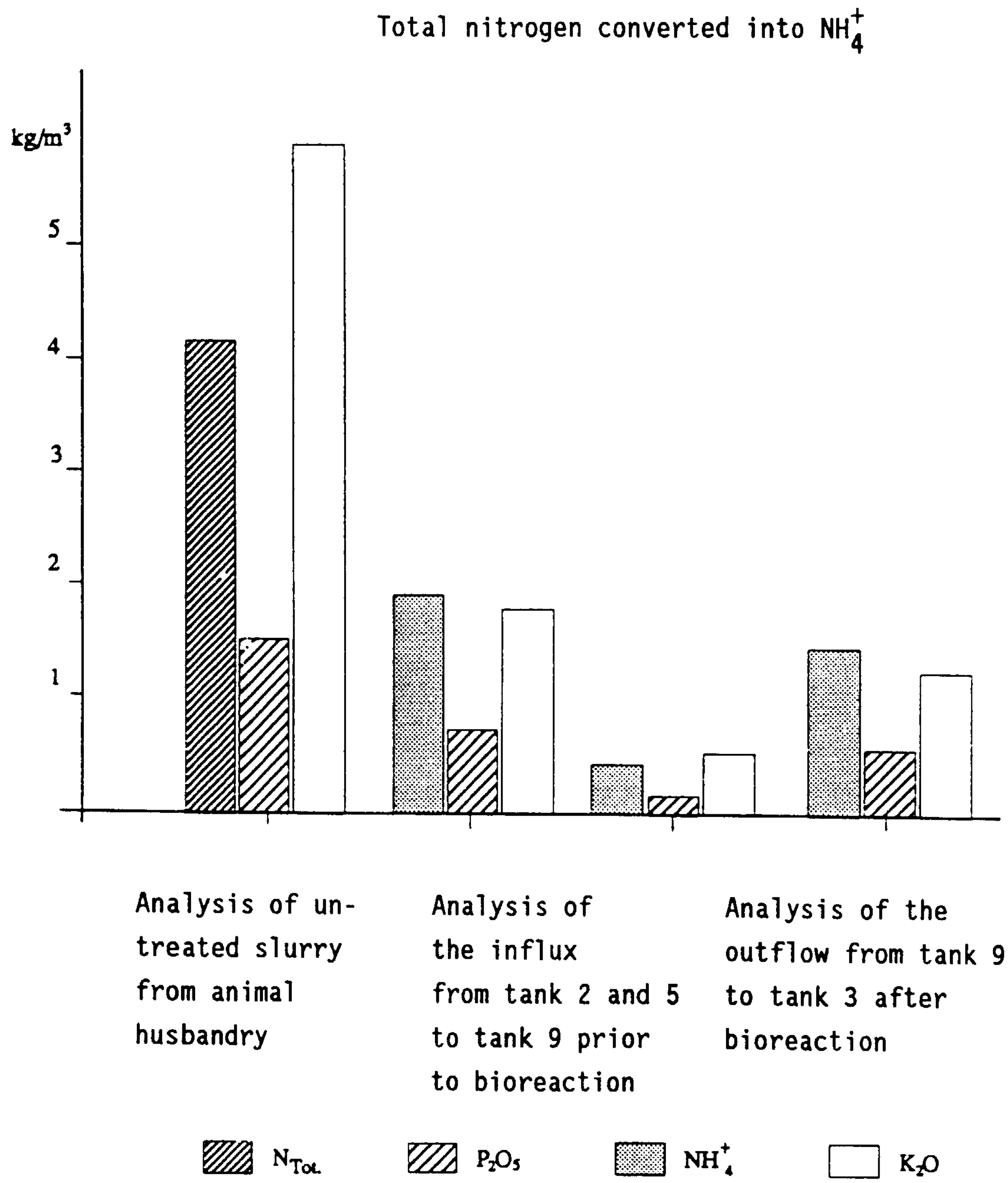


By changing the type of microorganisms, and the physical and chemical parameters in tank 8 it is possible to obtain very different yields for the decomposition of the lignocellulose based on the liberated quantities of N, P and K. As previously mentioned, N,P and K do not exist in the form of ions but are bound in the lignocellulose due to an incomplete biodegradation. It will be seen that the quantity of non-transferred materials is of almost the same size in tank 9 as in the discharge water from tank 8. A fibre fraction taken at step 5 shows a content of N < 0.1 kg/1000 1, P = 0 kg/1000 1, K < 0.25 kg/1000 1. An analysis of the mixture introduced into tank 3 from tanks 2 and 9 and the liquid fraction discharged from tank 3 shows the following results:

| | $NH_3$ | $P_2O_5$ | $K_2O$ |
|---|---|---|---|
| | kg/m³ | kg/m³ | kg/m³ |
| Untreated liquid manure for tank 3 | 4.25 | 1.55 | 5.83 |

(continued)

| | $NH_3$ | $P_2O_5$ | $K_2O$ |
|---|---|---|---|
| | kg/m³ | kg/m³ | kg/m³ |
| Biodecomposition in tank 9 | 1.53 | 0.42 | 1.28 |
| Liquid fraction from tank 2 | 2.29 | 0.97 | 4.07 |
| Non-transferred material in tank 9 | 0.43 | 0.16 | 0.48 |
| After precipitation in tank 3 | 0.46 | 0.17 | 5.83 |

This may also be expressed in a diagram

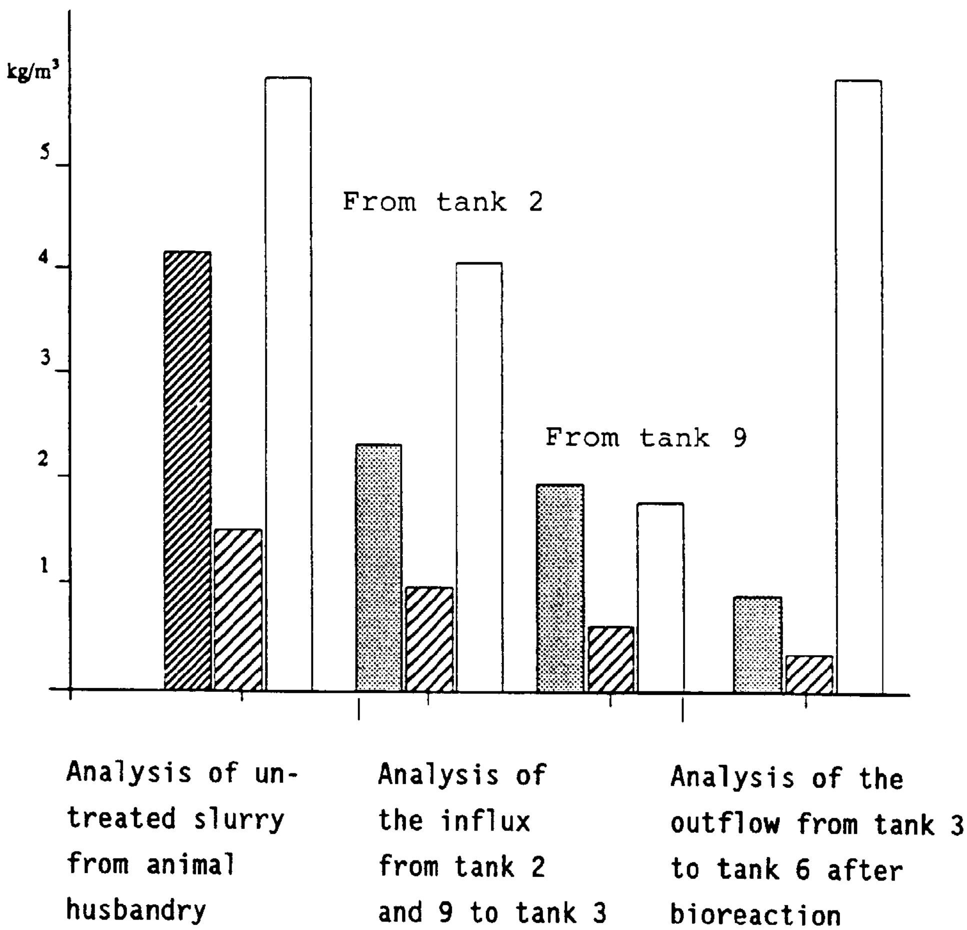


After the precipitation in tank 3, the liquid phase is optionally transferred to tank 6 in which an adjustment of pH is effected to precipitate the potassium content of the liquid. An analysis of the influx and the outflow from tank 6 shows the following:

| | $NH_3$ | $P_2O_5$ | $K_2O$ |
|---|---|---|---|
| | kg/m³ | kg/m³ | kg/m³ |
| Slurry from animal husbandry | 4.25 | 1.55 | 5.83 |
| Influx to tank 6 | 0.46 | 0.17 | 5.83 |

(continued)

| | $NH_3$ | $P_2O_5$ | $K_2O$ |
|---|---|---|---|
| | $kg/m^3$ | $kg/m^3$ | $kg/m^3$ |
| Outflow from tank 8 | 0.46 | 0.17 | 0.48 |

This may also be expressed in a diagram.

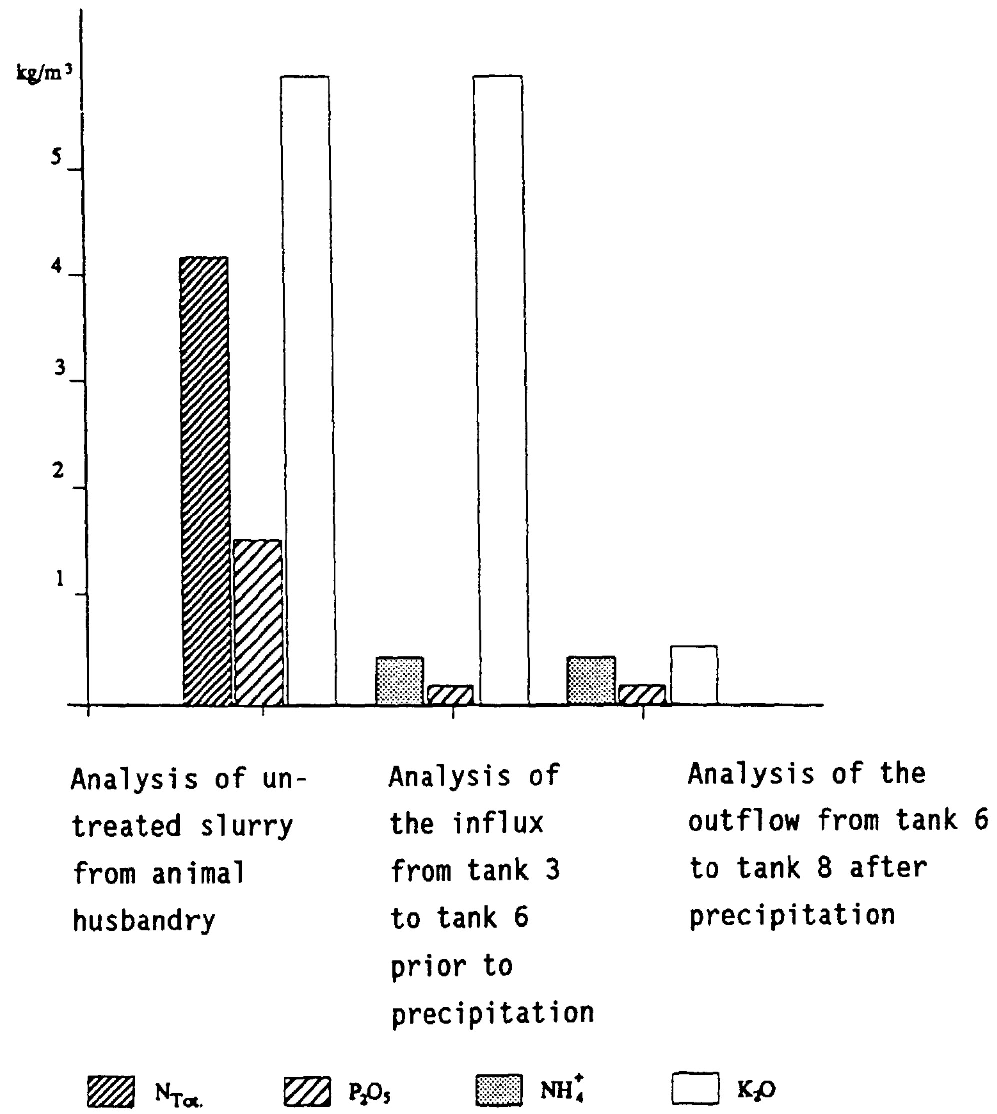


The water flowing into tank 8 corresponds to the water discharged into the external environment. As a result of the method, N,P and K are reduced by approximately 90% compared to the liquid manure charged into the process.

Thus, the practical tests conducted have produced residual concentrations of nitrogen and phosphorus which are below the normally accepted limits for contents of effluent waste water discharged to a recipient. Thus, the water fraction in tank 8 can be led directly out into the external environment, and the N,P and K fractions can be collected in a tank 10 and used as a fertilizer.

Specific examples of the chemicals used have been mentioned above, and the basic chemical reaction is based on the formation of sparingly soluble substances which can be caught in a filter. The basic chemical reactions

forming part of the method according to the invention are based on a division of the nitrogen of the manure into four main categories:

1. Organically bound high molecular N,
2. Urea, $CO(NH_2)_2$,
3. Ammonium in ionic form $NH_4^+$,
4. Ammonium $NH_3$ dissolved in water.

By adjusting pH it is possible to convert ammonia into the ionic form $NH_4^+$. Two categories, urea and ammonium, can then be subjected to precipitation. Urea can be brought on ammonium form either enzymatically or over time, e.g. in a biogas proces.

The phosphorus in the slurry is divided into two main categories:

1. Fibre bound P,
2. Monohydrogenphosphate, $HPO_4^{-2}$ as a residual product from metabolic processes.

Category 1 is small, and phosphorus will constitute a total of approximately 1/4 of the nitrogen content. This is a challenge to simultaneous precipitation.

The following gives examples of tests carried out with chemicals which are added as reactive agents.

1. <u>Oxalic acid</u>

Hypothesis: $2(NH_2)_2CO + (COOH)_2$

Precipitation test according to the hypothesis:

Medium: urea corresponding to 5g $N_{total}$/l dissolved in deionized water.

Reactive agent: oxalic acid dissolved in soft water to pH 2.

A residual product of $N_{total}$ in a number of from 852, 697, and 707 ppm, respectively, was obtained. Each of these tests states an average of 5-15 individual tests and was carried out at pH-values of from 5.9, 2.77 and 3.45, respectively. The residual concentrations after precipitation of oxalic acid were not satisfactory, even though the molecular size of the urea complex indicates an advantageous flocculating ability which will be of significance when using slurry as a medium.

<u>Nitric acid</u>

Hypothesis: $CO(NH_2)_2 + HNO_3$

Precipitation tets according to the hypothesis.

Medium: urea corresponding to 5g $N_{total}$/l dissolved in deionized water.

Reactive agent: nitric acid 70%..

In these tests, a residual product of $N_{total}$ of 736 and 604 ppm, respectively, was obtained. These results are an average of 10 individual tests carried out at pH-values of from 5.90 and 2.77, respectively.

<u>Magnesium sulfate</u>

Hypothesis:

$$CO(NH_2)_2 \rightarrow CO_2 + 2NH_3$$

$$NH_3 + H_3PO_4 \rightarrow N^+H_4 + H_2PO_4^{-1}$$

$$NH_3 + H_2PO_4^{-1} \rightarrow N^+H_4 + HPO_4^{-2}$$

$$NH_3 + HPO_4^{-2} \rightarrow N^+H_4 + PO_4^{-3}$$

$$N^+H_4 + Mg^{+2} + PO_4^{-3} \rightarrow NH_4MgPO_{4.x}H_2O$$

Precipitation test according to the hypothesis.

Medium: ammonium corresponding to 5g $N_{total}$/l (5000, ppm) and $PO_4^{-3}$ corresponding to 0.45 g $P_{total}$/l (450 ppm) dissolved in deionized water. Concentrations and proportions of N and P correspond to manure.

Reactive agents: Magnesium sulfate 0.1 mol/l
Trisodiumphosphate 0.1 mol/l
Sodiumcarbonate 0.1 mol/l
Phosphoric acid, concentrated.

These tests gave the following residual products.

| | | | Residual product | Residual product | Residual product |
|---|---|---|---|---|---|
| Test No. | $pH_1$ | $pH_2$ | $Mg^{+2}$ ppm | $N_{total}$ ppm | $P_{total}$ ppm |
| 1201 | 6.72 | 10.01 | 492 | 284 | 627 |
| 1202 | 6.80 | 10.19 | 138 | 80 | 177 |
| 1203 | 6.65 | 10.38 | 283 | 163 | 361 |
| 1204 | 6.84 | 10.56 | 419 | 242 | 536 |

The above main group of tests states an average of 5-20 individual tests at the pH 2 stated.

<u>Manganese sulfate</u>

Hypothesis:

$$CO(NH_2)_2 \rightarrow CO_2 + 2NH_3$$

$$NH_3 + H_3PO_4 \rightarrow N^+H_4 + H_2PO_4^{-1}$$

$$NH_3 + H_2PO_4^{-1} \rightarrow N^+H_4 + HPO_4^{-2}$$

$$NH_3 + HPO_4^{-2} \rightarrow N^+H_4 + PO_4^{-3}$$

$$N^+H_4 + Mn^{+2} + PO_4^{-3} \rightarrow NH_4MnPO_{4.x}H_2O$$

Precipitation test according to the hypothesis.

Medium: ammonium corresponding to 5g $N_{total}$/l (5000 ppm) and $PO_4^{-3}$ corresponding to 0.45 g $P_{total}$/l (450 ppm) dissolved in deionized water. Concentrations and proportions of N and P correspond to manure.

Reactive agents: Manganese sulfate 0.1 mol/l
Trisodiumphosphate 0.1 mol/l
Sodiumcarbonate 0.1 mol/l
Phosphoric acid, concentrated.

These tests gave the following results.

| | | | Residual product | Residual product | Residual product |
|---|---|---|---|---|---|
| Test No. | pH1 | pH2 | $Mn^{+2}$ ppm | $N_{total}$ ppm | $P_{total}$ ppm |
| 2600 | 2.67 | 8.23 | 6 | 1.5 | 3.3 |
| 2601 | 2.97 | 10.77 | 1480 | 378.0 | 836 |
| 2602 | 2.77 | 7.45 | 27 | 12.5 | 27 |
| 2603 | 2.80 | 9.66 | 451 | 115.0 | 254 |

The above main groups of tests state an average of 5-20 individual tests at the pH 2 stated.

The tests conducted on precipitation of urea complexes have shown that the processes are feasible, even though the experimental yields have been lower than immediately would be expected with the pH range tested. An efficient precipitation can only take place under extreme acid conditions. The results show that the optimum of the process has not been reached even in chemically pure solutions. Extrapolation of the results indicates a more advantageous precipitation of the urea complex.

Tests on simultaneous precipitation of phosphorus and ammonium with metals show high experimental yields. It has been found that the optimum process conditions have to be reached within a very narrow interval. Tests with a pH-value of about 8 have shown a remarkably efficient ammonium removal for manganese. Furthemore, manganese is preferred to magnesium due to the efficiency and a lower pH-value.

Examples of chemicals (11) for reactions in tank 3.

$$M^{+n} + (H^{+}, PO_4^{-3}) + \overset{+}{NH_4} \xrightarrow[\text{Temp. 10 - 100 °C}]{\text{pH 4 - 10}} NH_4MPO_4, x_1\,H_2O$$

$(NH_4)_yM_zH_t(PO_4)_v, x_1\,H_2O$

Example:

- $NH_4MnPO_4, H_2O$
- $NH_4MgPO_4, 6\,H_2O$
- $(NH_4)_4Mg(PO_4)_2, H_2O$
- $NH_4CaPO_4, 7H_2O$
- $NH_4CaH_3(PO_4)_2, H_2O$
- $(NH_4)_4Ca(PO_4)_2, H_2O$

$x_1 = 0,1,2,3...25$
$y = 1,2,3,4$
$z = 1,2....10$
$v = 1,2....18$
$t = 0,1,2..32$

$$M^{+n} + (H^{+}, PO_4^{-3}) + \overset{+}{NH_4} \xrightarrow[\text{Temp. 10 - 100 °C}]{\text{pH 4 - 10}} NH_4M(HPO_4)_2, x_2\,H_2O$$

$x_2 = 0,1,2,3...10$

Example:

- $NH_4Mn(HPO_4)_2, 3H_2O$
- $NH_4Ca(HPO_4)_2, H_2O$
- $(NH_4)_2Ca(HPO_4)_2, H_2O$
- $(NH_4)_2Mg(HPO_4)_2, H_2O$
- $NH_4Mg(HPO_4)_2, H_2O$
- $(NH_4)_2Mn(HPO_4)_2, H_2O$
- $NH_4Fe(HPO_4)_2$

$2MPO_4.NH_3, x_3\,H_2O$ — $x_3 = 0,1,2,3...10$
$2FePO_4,NH_3, 4H_2O$

$$M^{+n} + (H^{+}, P_2O_7^{-4}) + \overset{+}{NH_4} \xrightarrow[\text{Temp. 10 - 100 °C}]{\text{pH 4 - 10}} NH_4MH_yP_2O_7, x_5\,H_2O$$

$x_6 = 0,1,2,...10$
$y = 0$ or $1$

Example:

- $NH_4MnP_2O_7, H_2O$
- $NH_4MHP_2O_7, x_7\,H_2O$
- $NH_4MnHP_2O_7, H_2O$

$$M^{+n} + (H^{+}, P_3O_{10}^{-5}) + \overset{+}{NH_4} \xrightarrow[\text{Temp. 10 - 100 °C}]{\text{pH 4 - 10}} NH_4M_2P_3O_{10}, x_8\,H_2O$$

$NH_4Mn_2P_3O_{10}, 6\,H_2O$

$x_8 = 0,1,...15$

$M^{+n}$.: $Mg^{+2}$, $Ca^{+2}$, $Ba^{+2}$, $Be^{+2}$, $Co^{+2}$, $Zn^{+2}$, $Mn^{+2}$, $Mn^{+3}$, $Fe^{+2}$, $Fe^{+3}$, $Al^{+3}$, $Cu^{+1}$, $Cu^{+2}$, $B^{+3}$. Si......etc.

Examples of chemicals (12) for reactions in tank 6.

$$M^{+n} + (H^{+}, PO_4^{-3}) + K^{+} \xrightarrow[\text{Temp. 10 - 100 °C}]{\text{pH 4 - 10}} KMPO_4,\ x_1\ H_2O \qquad x_1 = 0,1,2,3...25$$

$(K)_yM_zH_t(PO_4)_v,\ x_1\ H_2O$ — $y = 1,2,3,4$; $z = 1,2....10$; $v = 1,2....18$; $t = 0,1,2..32$

Example:

- $KMnPO_4,\ H_2O$
- $KMgPO_4,\ 6\ H_2O$
- $(K)_4Mg(PO_4)_2,\ H_2O$
- $K_4CaPO_4,\ 7H_2O$
- $KCaH_3(PO_4)_2,\ H_2O$
- $(K)_4Ca(PO_4)_2,\ H_2O$

$$M^{+n} + (H^{+}, PO_4^{-3}) + K^{+} \xrightarrow[\text{Temp. 10 - 100 °C}]{\text{pH 4 - 10}} KM(HPO_4)_2,\ x_2\ H_2O \qquad x_2 = 0,1,2,3...10$$

Example:

- $KMn(HPO_4)_2,\ 3H_2O$
- $KCa(HPO_4)_2,\ H_2O$
- $(K)_2Ca(HPO_4)_2,\ H_2O$
- $(K)_2Mg(HPO_4)_2,\ H_2O$
- $KMg(HPO_4)_2,\ H_2O$
- $(K)_2Mn(HPO_4)_2,\ H_2O$
- $KFe(HPO_4)_2$

$$M^{+n} + (H^{+}, P_2O_7^{-4}) + K^{+} \xrightarrow[\text{Temp. 10 - 100 °C}]{\text{pH 4 - 10}} KMH_yP_2O_7,\ x_5\ H_2O \qquad x_6 = 0,1,2,...10;\ y = 0 \text{ or } 1$$

Example:

- $KMnP_2O_7,\ H_2O$
- $KMHP_2O_7,\ x_7\ H_2O$
- $KMnHP_2O_7,\ H_2O$

$$M^{+n} + (H^{+}, P_3O_{10}^{-5}) + K^{+} \xrightarrow[\text{Temp. 10 - 100 °C}]{\text{pH 4 - 10}} KM_2P_3O_{10},\ x_8\ H_2O \qquad x_8 = 0,1,...15$$

$KMn_2P_3O_{10},\ 6\ H_2O$

$M^{+n}$.: $Mg^{+2}$, $Ca^{+2}$, $Ba^{+2}$, $Be^{+2}$, $Co^{+2}$, $Zn^{+2}$, $Mn^{+2}$, $Mn^{+3}$, $Fe^{+2}$, $Fe^{+3}$, $Al^{+3}$, $Cu^{+1}$, $Cu^{+2}$, $B^{+3}$, Si......etc.

Examples of chemicals (12) for reactions in tank 6 (cont.).

$$M^{+n} + (H^{+}, PO_4^{-3}) + K^{+} + NH_4^{+} \xrightarrow[\text{Temp. 10 - 100 °C}]{\text{pH 4 - 10}} NH_4KMH(PO_4)_2,\ x_2\ H_2O \qquad x_2 = 0,1,2,3...10$$

Example

$NH_4KMnH(PO_4)_2,\ 3H_2O$

$NH_4KCaH(PO_4)_2,\ H_2O$

$(K)_2Ca(HPO_4)_2,\ H_2O$

$NH_4KMg(HPO_4)_2,\ H_2O$

$NH_4KMgH(PO_4)_2,\ H_2O$

$NH_4KMn(HPO_4)_2,\ H_2O$

$KFe(HPO_4)_2$

$$M^{+n} + (H^{+}, P_2O_7^{-4}) + K^{+} + NH_4^{+} \xrightarrow[\text{Temp. 10 - 100 °C}]{\text{pH 4 - 10}} NH_4KMH_yP_2O_7,\ x_5\ H_2O \qquad x_6 = 0,1,2,...10 \quad y = 0 \text{ or } 1$$

Example

$NH_4KMnP_2O_7,\ 3\ H_2O$

$NH_4KMHP_2O_7,\ x_7\ H_2O$

$NH_4KMnHP_2O_7,\ H_2O$

$M^{+n}$.: $Mg^{+2}$, $Ca^{+2}$, $Ba^{+2}$, $Be^{+2}$, $Co^{+2}$, $Zn^{+2}$, $Mn^{+2}$, $Mn^{+3}$, $Fe^{+2}$, $Fe^{+3}$, $Al^{+3}$, $Cu^{+1}$, $Cu^{+2}$, $B^{+3}$, Si......etc.

Fig. 2 illustrates a plant substantially like the one shown in Fig. 1, but in which a heat exchanger is inserted at the treatment stage treating the liquid fraction. This is associated with problems as there is a risk that a precipitate may be formed and the heat exchanger consequently may be blocked. This problem is solved by the present embodiment as two chemical process steps are carried out, one process step before and one process step after the heat exchanger, the first step i.a. ensuring that no precipitate is formed in the heat exchanger. Fresh manure is added to tank 1 and subsequently the fresh manure is transferred to a fibre separation step 2 in which the fibres present in the manure are separated from the fresh manure. The separated fibre amount 5 is passed to a composting plant 9 of a known type. However, the separation of fibres may optionally be omitted. The liquid fraction of the manure is passed to a pre-mixer 15 after the concentration of the following ions has been measured at point 16: ammonium ions, phosphate ions, carbonate ions and potassium ions. Depending on primarily the concentration of ammonium and carbonate, acid and (alkaline ions) (inserted during translation, translator's remark), preferably phosphate ions, $H^+$ and $X^{n-}$, respectively, are added. The added acid ions, $H^+$, are preferably derived from phosphorus acid, whereas the added base ions, $X^{n-}$, may be a phosphate-containing anion. This results in that the carbonate ion present in the liquid fraction is bound to the base ion and water and forms $CO_2$ which is liberated in the form of gas. In order to avoid precipitation in the heat exchanger 17, it is necessary to keep the acidity sufficiently low, which means a pH-value of from 5 or less, preferably 3.5. The liquid fraction is then passed through the heat exchanger 17 in which the temperature of the fraction is adjusted to between 40 and 50°C, preferably 45°C. After the liquid fraction has passed through the heat exchanger 17, it is passed to a after-mixer 18, in which adjustment of the acidity is repeated, but at this stage the purpose of the adjustment is to form fertilizing substances which can be precipitated. Preferably, the liquid fraction supplied to the after-mixer 18 has at the inlet 19 an acidity corresponding to pH = 3.5 as mentioned above. In the after-mixer various metal ions, $M^{2+}_a$ and $M^{2+}_b$, and alkaline ions, $B^{m-}$, are added. The metal ions are preferably Mn-ions and Mg-ions, whereas the alkaline ions preferably are $CO^{2-}{}_3$-ions. However, other ions may also be used, but the addition of the above mentioned ions will result in the highest fertilizer value of the precipitates formed. The amount of the added ions is adjusted so that the pH-value is increased to between 7 and 9, preferably 8.2 and so that the substances which consequently may be precipitated are substances which can be used for fertilization or which are not sparingly soluble

or in any other way damaging to the environment. The following test descriptions with accompanying tables and graphic depictions illustrate that the ammonium content, either in the form of $NH_4MnPO_4$ or $NH_4MgPO_4$, has its lowest value at a temperature of about 45°C and at pH = 8.2. Moreover, it appears from the graphic depictions that in case zinc is used as a metal ion, pH must be in the range of between 8.5 and 9.1 in order have a minimum amount of ammonium ions.

After the liquid fraction is made alkaline in the after-mixer 18 with a pH of about 8.2 measured at point 20, optionally by recirculating the fraction in the mixer, it is passed to a separator 21. In the separator, the temperature is reduced to between 10 and 12°C and a separation of fertilizing substances is thus effected and the substances are precipitated. The liquid fraction which remains after the separation is very pure and can be discharged directly as effluent waste water 22 or to another recipient 23. In the separator 21, a degasification of $CO_2$ is effected provided the alkaline ions supplied to the after-mixer 18 are $CO_{3-}^{2-}$ions. The precipitated fertilizing substances 24 are dried in a centrifuge and the liquid extracted is passed to a recipient 23. The dried nutrients 26 are mixed in a solid-matter mixer 27 with the fibre fraction 5 which was separated in 2 and composted in 9. An air drying may optionally be effected after the mixing at point 28. The described method results in a organic fertilizer mass 29 which is enriched with the nutrients 24 which are separated from the fresh manure as part of the method according to the invention.

In the following tables of results optained with a plant of the above mentioned type are tabulated.

Medium: ammonium corresponding to 5g $N_{total}$/l (5000 ppm) and $PO_4^{-3}$ corresponding to 0.45 g $P_{total}$/l (450 ppm) dissolved in deionized water. Concentrations and proportions of N and P correspond to the degasified manure which is being processed.

Reactive agents: Manganese chloride: 0.5 mol/l
Phosphoric acid : concentrated
Natrium carbonate : 0.5 mol/l.

Test conditions:

The concentration of ammunion ions are maintained constant so as to correspond to 0.27 mol/l, equivalent amounts of phosphoric acid and manganese chloride are added, the resultant solution is heated to the temperatures stated for the test, the solution is then made alkaline by adding natrium carbonate so that pH = 8.2, which means pH is constant. Measurements are performed, i.e. a small sample of the liquid fraction is initially taken to determine the $NH_4^+$. Subsequently, the precipitate is filtered off at vacuum and by washing with ion-exchanged water. The precipitate is dried at 80°C for 48 hours before the concentration of $NH_4^+$ in the precipitate is determined by dissolving the latter in mineral acid. The precipitate has the following composition: $NH_4MnPO_4,H_2O$.

These tests gave the following results.

| Temperature °C | $[NH_4^+]$ in $NH_4MnPO_4,H_2O$ (ppm) |
|---|---|
| 20 | 302 |
| 30 | 73 |
| 40 | 22 |
| 45 | 9 |
| 50 | 11 |
| 60 | 64 |
| 70 | 295 |

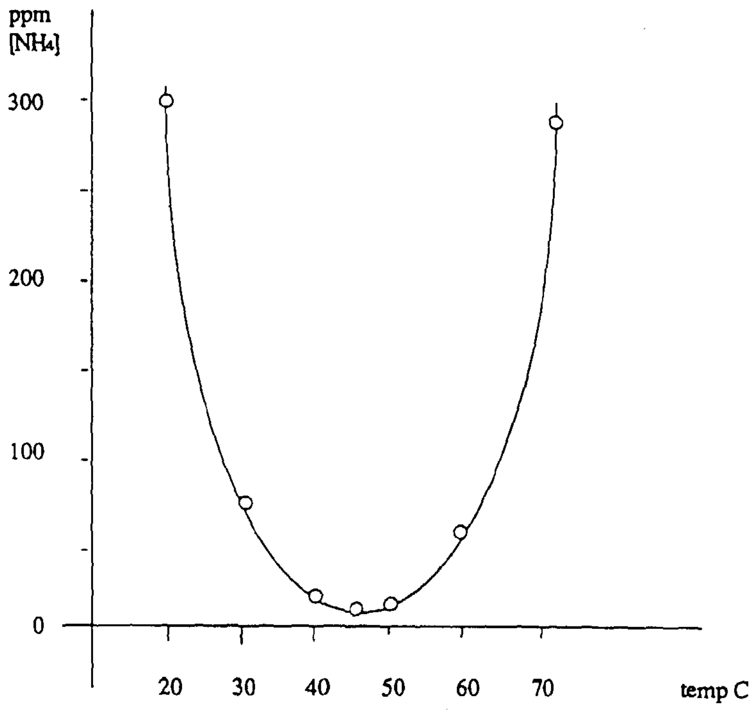


Medium: ammonium corresponding to 5g $NH_4$/l (5000 ppm) and $PO_4$ corresponding to 0.45 g $P_{total}$/l (450 ppm) dissolved in deionized water. Concentrations and proportions of N and P correspond to the degasified manure which is being processed.

Reactive agents: Manganese chloride: 0.5 mol/l
Phosphoric acid : concentrated
Natrium carbonate : 0.5 mol/l.

Test conditions:

The concentration of ammunion ions are maintained constant so as to correspond to 0.27 mol/l, equivalent amounts of phosphoric acid and manganese chloride are added, the pH-value is measured (point 19) = $pH_1$. The solution is then made alkaline with natrium carbonate. After addition of a varying amount of natrium carbonate, the pH-value is measured (point 20) = $pH_2$. The test is conducted by initially taking out a small sample of the liquid fraction to determine $NH_4$ and subsequently by separating the precipitate by filtration at vacuum and by washing with ion-exchanged water. The precipitate is dried at 80°C for 48 hours before determining the $NH_4$ content in $NH_4MnPO_4,H_2O$.

These tests gave the following results.

| Test No. | $pH_1$ | $pH_2$ | Residual product $[NH_4^+]$ ppm in solution | Residual product $[NH_4^+]$ ppm $NH_4MnPO_4,H_2O$ |
|---|---|---|---|---|
| 3609 | 1.54 | 4.05 | 2360 | 2571 |
| 3610 | 1.54 | 5.08 | 1204 | 3742 |
| 3611 | 1.54 | 5.88 | 592 | 4402 |
| 3612 | 1.54 | 6.91 | 152 | 4813 |
| 3613 | 1.54 | 7.45 | 13 | 4964 |
| 3614 | 1.54 | 8.02 | 7 | 4963 |
| 3615 | 1.54 | 8.24 | 2 | 4982 |
| 3616 | 1.54 | 8.92 | 98 | 4874 |
| 3617 | 1.54 | 9.08 | 334 | 4619 |

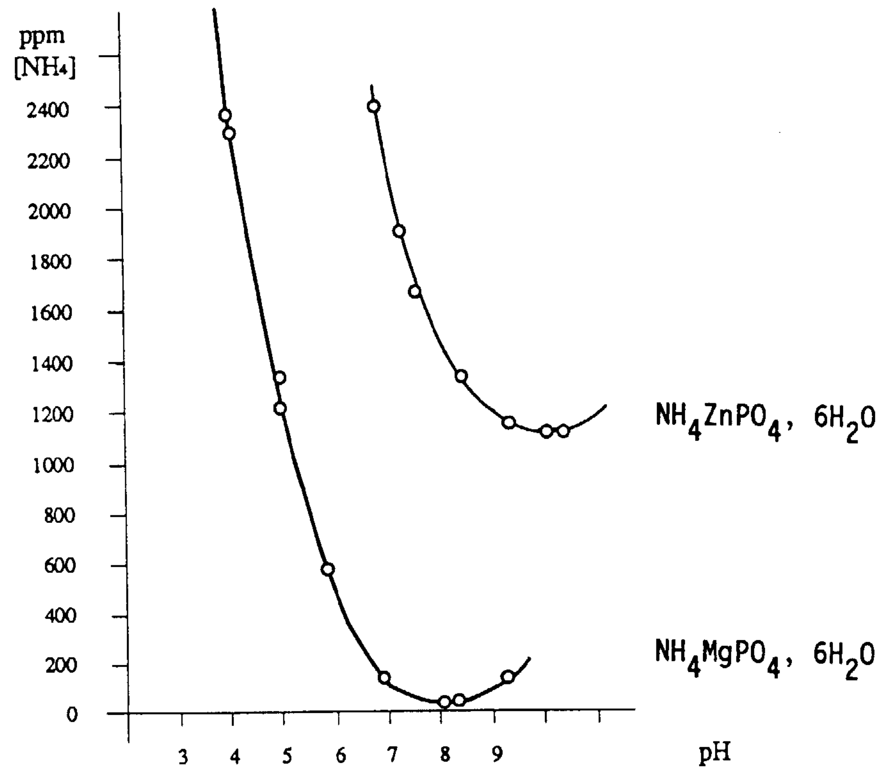


## Claims

1. A method of treating a biomass in the form of domestic animal manure, slurry, organically loaded effluent waste water, or mixtures thereof, comprising a chemical treatment of the biomass, pre-treating a fresh biomass mechnically and/or chemically, measuring $NH_4^+$, $PO_4^{3-}$, $CO_3^{-2}$ and $K^+$, precipitating the nitrogen and phosphorus content of the pretreated biomass by adding at least manganese in a stoichiometric ratio corresponding to the $NH_4MnPO_4$ precipitate which is caused to react with the nitrogen compounds and the phosphorus compounds present in the biomass, precipitating any urea content together with the nitrogen, phosphorus and optional potassium content of the biomass, and subsequently separating the biomass into a supernatant fraction and a fertilizer fraction.

2. A method according to claim 1, **characterized** in that the biomass to be treated is a fibre-containing biomass and that the pre-treatment of the untreated biomass comprises the steps of precipitating a fibre fraction, separating the fibre fraction from the liquid fraction, adjusting the pH-value of the fibre fraction, decomposing the fibre fraction by adding microorganisms and/or enzymes to liberate nitrogen bound in the fibres, remixing the biologically decomposed fibre fraction with the liquid fraction, adjusting the pH-value of the biomass thus treated before adding a precipitating agent in the form of metal ions.

3. A method according to claim 2, **characterized** in that urea is precipitated using as a precipitating agent a complex forming inorganic or organic acid and that urea is precipitated together with the ammonium and phosphate ions.

4. A method according to any of the preceding claims, **characterized** in that the precipitating reactions are carried out at a pH-value of between 3.5 and 10 and at a temperature of between 10°C and 100°C.

5. A method according to claim 1, **characterized** in that the pre-treatment of the untreated biomass consists in a degasification and a subsequent mechanical filtration, an adjustment of the pH-value of the biomass and an addition of the precipitating agents in the form of metal ions and an adjustment of the content of phosphate ions.

6. A method according to claim 4, **characterized** in that the pH-adjustment of the biomass is effected in two steps, by effecting an initial adjustment to a pH-value of from 3-5, preferably 3.5, followed by a preheating of the biomass to a temperature in the range of from 40-55°C, and by effecting a second pH-adjustment by adjusting the pH-value to 8-9.5, preferably about 8.2, followed by the precipitation.

7. A method according to claim 5, **characterized** in that the separation into a supernatant fraction and a fertilizer fraction is effected by precipitation, and that the precipitated material is further separated by centrifuging, and subsequently that the precipitated material is optionally mixed with the fibre fraction which is mechanically filtered off.

8. A method according to claim 1 or 2, **characterized** in that the content of ammonium and phosphate in the biomass is precipitated in a first step, that the potassium ion content in the biomass is precipitated in a second step, that the resulting mixtures from the two precipitation steps are each separated in a precipitate fraction and a supernatant fraction, that the two precipitates are combined and that the two supernatant fractions are combined and discharged directly to a recipient.

9. A method according to claim 1,**characterized** in that the urea content of the pre-treated biomass is precipitated by adding an organic or inorganic acid, preferably oxalic acid, nitric acid or phosphorus acid in connection with metal ions, which reacts with the urea of the biomass to form urea complexes which are subsequently separated from the supernatant fraction of the biomass and discharged together with the precipitate containing ammonium and phosphate.

10. A method according to any of claims 1-7 and 9, **characterized** in that the ammonium, phosphate, potassium and urea are precipitated simultaneously.

**Patentansprüche**

1. Verfahren zur Behandlung einer Biomasse in Form von Haustiermist, einer Aufschlämmung, organisch belastetem abfließendem Schmutzwasser oder Gemischen davon, umfassend eine chemische Behandlung der Biomasse, mechanisches und/oder chemisches Vorbehandeln einer frischen Biomasse, Messen von $NH_4^+$, $PO_4^{3-}$, $CO_3^{-2}$ und $K^+$, Präzipitieren des Stickstoff- und Phosphoranteils der vorbehandelten Biomasse durch Zusetzen von wenigstens Mangan in einem stöchiometrischen Verhältnis, welches dem $NH_4MnPO_4$-Präzipitat entspricht, das dazu gebracht wird, mit den in der Biomasse vorhandenen Stickstoffverbindungen und Phosphorverbindungen zu reagieren, Präzipitieren eines jeglichen Harnstoffanteils zusammen mit dem Stickstoff-, Phosphor- und optionalem Kaliumanteil der Biomasse und anschließendes Trennen der Biomasse in eine Überstandsfraktion und eine Düngerfraktion.

2. Verfahren gemäß Anspruch 1, dadurch gekennzeichnet, daß die zu behandelnde Biomasse eine faserhaltige Biomasse ist und daß die Vorbehandlung der unbehandelten Biomasse die Schritte des Präzipitierens einer Faserfraktion, des Abtrennens der Faserfraktion von der flüssigen Fraktion, des Einstellens des pH-Wertes der Faserfraktion, des Abbauens der Faserfraktion durch Zusetzen von Mikroorganismen und/oder Enzymen, um den in den Fasern gebundenen Stickstoff freizusetzen, des erneuten Mischens der biologisch abgebauten Faserfraktion mit der flüssigen Fraktion und des Einstellens des pH-Wertes der so behandelten Biomasse vor Zugeben eines Präzipitationsmittels in Form von Metallionen umfaßt.

3. Verfahren gemäß Anspruch 2, dadurch gekennzeichnet, daß Harnstoff präzipitiert wird, wobei eine komplexbildende anorganische oder organische Säure als ein Präzipitationsmittel verwendet wird, und daß Harnstoff zusammen mit den Ammonium- und Phosphationen gefällt wird.

4. Verfahren gemäß irgendeinem der vorstehenden Ansprüche, dadurch gekennzeichnet, daß die Präzipitierungsreaktionen bei einem pH-Wert zwischen 3,5 und 10 und bei einer Temperatur zwischen 10°C und 100°C durchgeführt werden.

5. Verfahren gemäß Anspruch 1, dadurch gekennzeichnet, daß die Vorbehandlung der unbehandelten Biomasse aus einer Entgasung und einer anschließenden mechanischen Filtration, einer Einstellung des pH-Wertes der Biomasse und einer Zugabe der Präzipitierungsmittel in Form von Metallionen und einer Einstellung des Anteils von Phosphationen besteht.

6. Verfahren gemäß Anspruch 4, dadurch gekennzeichnet, daß die pH-Einstellung der Biomasse in zwei Schritten bewerkstelligt wird, indem eine anfängliche Einstellung auf einen pH-Wert von 3-5, vorzugsweise 3,5, bewirkt wird, gefolgt von einem Vorwärmen der Biomasse auf eine Temperatur im Bereich von 40-55°C, und indem eine zweite pH-Einstellung durch Einstellen des pH-Wertes auf 8-9,5, vorzugsweise etwa 8,2, bewirkt wird, gefolgt von der Präzipitation.

7. Verfahren gemäß Anspruch 5, dadurch gekennzeichnet, daß die Trennung in eine Überstandsfraktion und eine Düngerfraktion durch Präzipitation bewerkstelligt wird, und daß das präzipitierte Material weiter durch Zentrifugieren getrennt wird, und daß das präzipitierte Material anschließend wahlfrei mit der Faserfraktion, welche mechanisch abfiltriert wird, gemischt wird.

8. Verfahren gemäß Anspruch 1 oder 2, dadurch gekennzeichnet, daß der Anteil von Ammonium und Phosphat in der Biomasse in einem ersten Schritt präzipitiert wird, daß der Kaliumionenanteil in der Biomasse in einem zweiten Schritt präzipitiert wird, daß die resultierenden Gemische aus den zwei Präzipitationsschritten jeweils in eine Präzipitatfraktion und eine Überstandsfraktion aufgetrennt werden, daß die zwei Präzipitate vereinigt werden und daß die zwei Überstandsfraktionen vereinigt und direkt in ein Auffangbehältnis abgeführt werden.

9. Verfahren gemäß Anspruch 1, dadurch gekennzeichnet, daß der Harnstoffanteil der vorbehandelten Biomasse präzipitiert wird durch Zugeben einer organischen oder anorganischen Säure, vorzugsweise Oxalsäure, Salpetersäure oder Phosphorsäure, in Verbindung mit Metallionen, welche mit dem Harnstoff der Biomasse reagiert, wodurch Harnstoffkomplexe gebildet werden, die anschließend aus der Überstandsfraktion der Biomasse abgetrennt und zusammen mit dem Präzipitat, das Ammonium und Phosphat enthält, abgeführt werden.

10. Verfahren gemäß irgendeinem der Ansprüche 1-7 und 9, dadurch gekennzeichnet, daß das Ammonium, Phosphat, Kalium und Harnstoff gleichzeitig präzipitiert werden.

**Revendications**

1. Procédé pour traiter une biomasse sous la forme d'eaux usées d'efffluent chargé organiquement sous forme de suspension de fumier d'animal domestique ou de leur mélange, comportant un traitement chimique de la biomasse, qui est constitué d'un pré-traitement d'une biomasse fraîche mécaniquement et/ou chimiquement, de la mesure des concentrations $NH_4^+$, $PO_4^{3-}$, $CO_3^{-2}$ et $K^+$, de la précipitation des contenus d'azote et de phosphore de la biomasse prétraitée par addition d'au moins du manganèse dans un rapport stoéchiométrique correspondant au précipité de $NH_4\ M_n\ PO_4$ qui est amené à réagir avec les composés azotes et les composés phosphores présents dans la biomasse, de la précipitation de tout contenu d'urée avec les contenus en azote, en phosphore et en potassium éventuel de la biomasse, et ensuite la séparation de la biomasse en une fraction surnageante et une fraction de substances fertilisantes.

2. Procédé suivant la revendication 1,**caractérisé** en ce que la biomasse à traiter est une biomasse contenant des fibres et en ce que le pré-traitement de la biomasse non traitée comprend les étapes qui consistent à précipiter une fraction de fibres, à séparer la fraction de fibres de la fraction liquide, à ajuster la valeur de pH de la fraction de fibres, à décomposer la fraction de fibres en ajoutant des micro-organismes et/ou des enzymes pour libérer l'azote liée dans les fibres, à remélanger la fraction de fibres biologiquement décomposée avec la fraction liquide, à ajuster la valeur de pH de la biomasse ainsi traitée avant d'ajouter un agent de précipitation sous la forme d'ions métalliques.

3. Procédé suivant la revendication 2, **caractérisé** en ce que l'urée est précipitée en utilisant comme agent de précipitation un acide organique ou non organique formant complexe et en ce que l'urée est précipitée avec les ions phosphates et ammonium.

4. Procédé suivant l'une quelconque des revendications précédentes, **caractérisé** en ce que les réactions de précipitation sont effectuées à une valeur de pH comprise entre 3,5 et 10 et à une température comprise entre 10°C et 100°C.

5. Procédé suivant la revendication 1, **caractérisé** en ce que le pré-traitement de la biomasse non traitée est constitué d'une dégazéification puis d'une filtration mécanique, un ajustement de la valeur de pH de la biomasse et un ajout des agents de précipitation sous la forme d'ions métalliques et un ajustement de la teneur en ions phosphates.

6. Procédé suivant la revendication 4, **caractérisé** en ce que l'ajustement de pH de la biomasse est effectué en deux étapes, en effectuant un ajustement initial à une valeur de pH comprise entre 3 et 5, de préférence 3,5, suivi par un préchauffage de la biomasse à une température comprise entre 40 et 55°C, et en effectuant un second ajustement de pH en ajustant la valeur de pH entre 8 et 9,5, de préférence environ 8,2 suivi par la précipitation.

7. Procédé suivant la revendication 5, **caractérisé** en ce que la séparation en une fraction surnageante et une fraction d'agent fertilisant est effectuée par précipitation, et en ce que le matériau précipité est en outre séparé par centrifugation, et ensuite en ce que le matériau précipité est éventuellement mélangé à la fraction de fibre qui est mécaniquement éliminée par filtrage.

8. Procédé suivant la revendication 1 ou 2,**caractérisé** en ce que la teneur en ammonium et en phosphate dans la biomasse est précipitée dans une première étape, en ce que la teneur en ions potassium dans la biomasse est précipitée en une seconde étape, en ce que les mélanges résultant des deux étapes de précipitation sont chacun séparés en une fraction de précipité et une fraction surnageante, en ce que les deux précipités sont combinés et en ce que les deux fractions surnageantes sont combinées et déchargées directement dans un récipient.

9. Procédé suivant la revendication 1, **caractérisé** en ce que la teneur en urée de la biomasse prétraitée est précipitée en ajoutant un acide organique ou non organique, de préférence de l'acide oxalique, de l'acide nitrique ou de l'acide phosphorique en liaison avec des ions métals, qui réagit avec l'urée de la biomasse pour former des complexes d'urées qui sont ensuite séparés de la fraction surnageante de la biomasse et déchargés avec les précipités contenant de l'ammonium et du phosphate.

10. Procédé suivant l'une quelconque des revendications 1 à 7 et 9, **caractérisé** en ce que l'ammonium, le phosphate, le potassium et l'urée sont précipités simultanément.

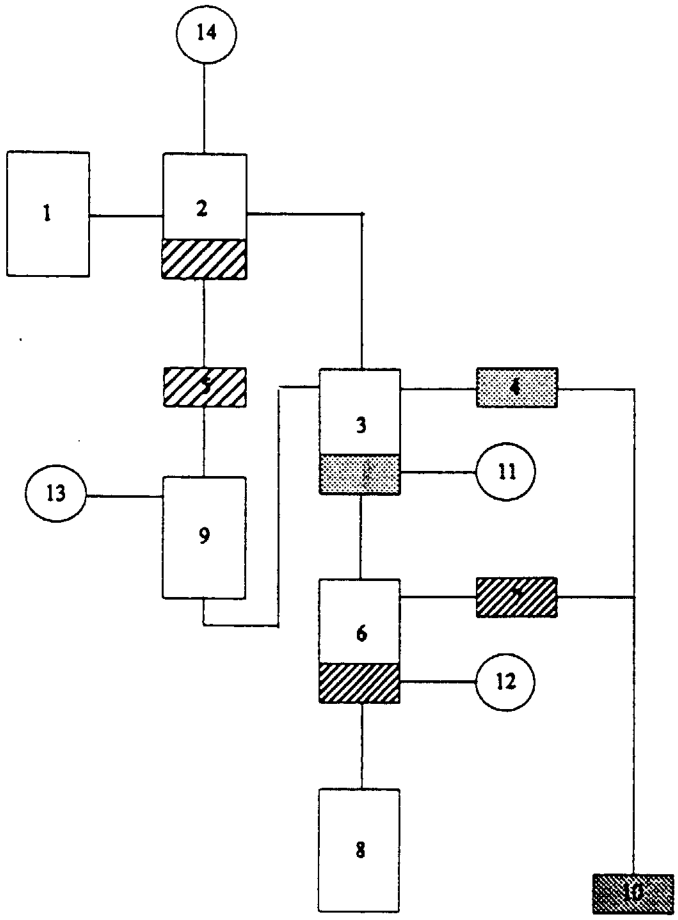


FIG. 1

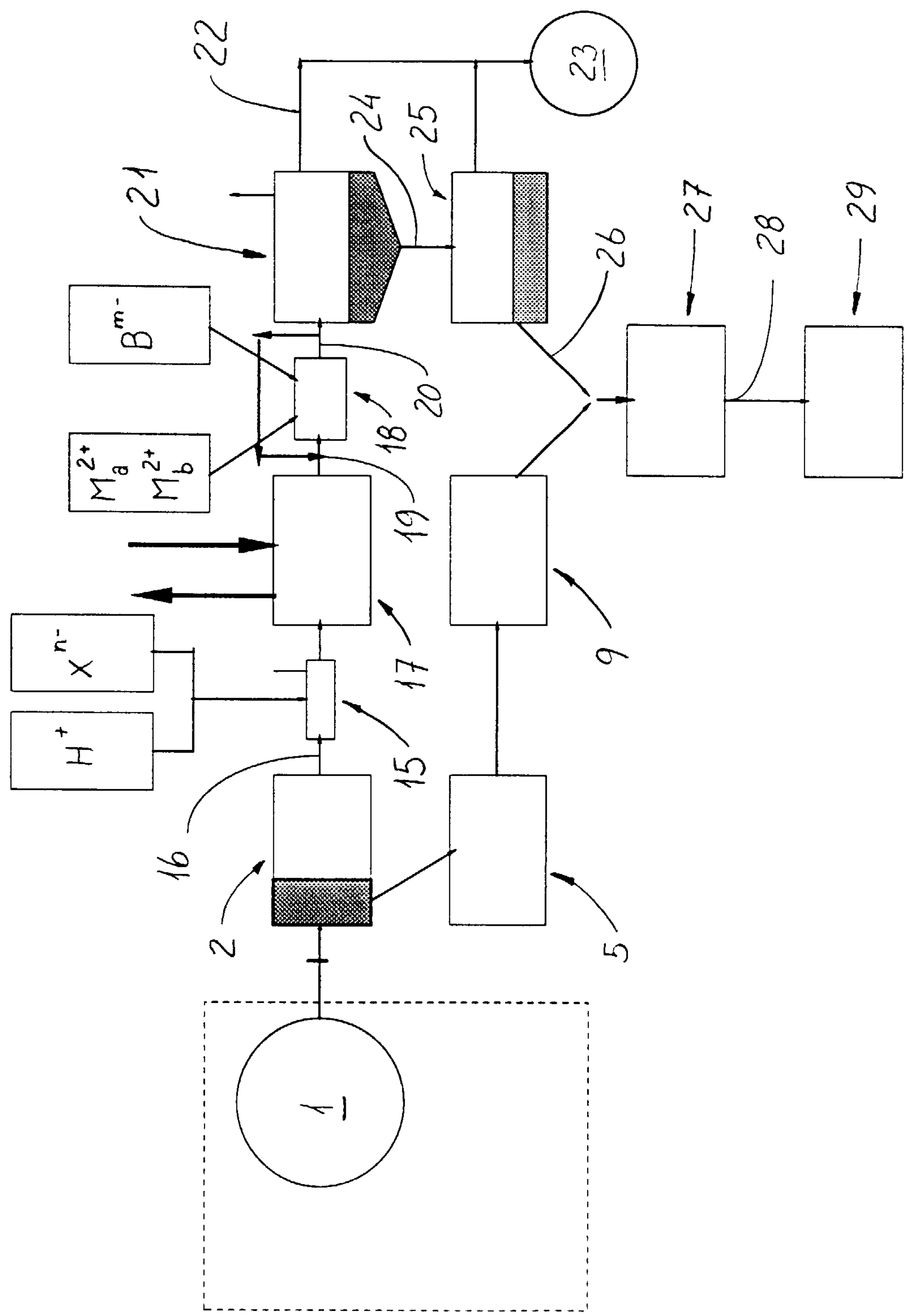


FIG. 2